Europäisches Patentamt

European Patent Office

Office européen des brevets

(11) Publication number: **0 175 769**
**B1**

# EUROPEAN PATENT SPECIFICATION

(45) Date of publication of patent specification: **31.10.90**

(21) Application number: **85901844.2**

(22) Date of filing: **28.03.85**

(86) International application number:
**PCT/US85/00527**

(87) International publication number:
**WO 85/04365 10.10.85 Gazette 85/22**

(51) Int. Cl.⁵: **B 29 C 67/04, B 32 B 5/16, B 32 B 27/32**

(54) **POLYETHYLENE MOLDING COMPOSITION AND PROCESS.**

(30) Priority: **29.03.84 US 594609**

(43) Date of publication of application:
**02.04.86 Bulletin 86/14**

(45) Publication of the grant of the patent:
**31.10.90 Bulletin 90/44**

(84) Designated Contracting States:
**DE FR GB IT**

(56) References cited:
| | |
|---|---|
| EP-A-0 042 768 | US-A-4 110 391 |
| DT-A-2 526 958 | US-A-4 171 338 |
| US-A-3 051 993 | US-A-4 246 390 |
| US-A-3 229 002 | US-A-4 248 819 |
| US-A-3 822 177 | US-A-4 272 474 |
| US-A-3 847 888 | US-A-4 323 531 |
| US-A-3 944 536 | US-A-4 436 682 |
| US-A-3 954 927 | ZA-A- 103 915 |
| US-A-3 975 481 | |

(73) Proprietor: HOECHST CELANESE
CORPORATION
Route 202-206 North
Somerville, N.J. 08876 (US)

(72) Inventor: VAN DELINDER, George, S.
299 Page Street
Lunenberg, MA 01462 (US)
Inventor: NALEPA, Raymond
339 Day Street
Leominster, MA 01453 (US)
Inventor: COLFORD, Donald
3 Robin Lane
Hingham, MA 02043 (US)

(74) Representative: Reichelt, Karl-Heinz, Dr.
Hoechst-Aktiengesellschaft Werk Ruhrchemie
Postfach 13 01 60
D-4200 Oberhausen 11 (DE)

Courier Press, Leamington Spa, England.

# EP 0 175 769 B1

**Description**

### Background of the Invention

This invention relates to a molding composition and a method of preparing said composition according to the preambles of claims 1 and 7. Such a composition and such a method are known from EP—A—0042768. The invention further relates to a porous product.

It is well known in the art to prepare porous articles from thermo-plastic polymers. In particular, it is known to prepare porous polyethylene products from a polymer having a molecular weight in excess of $1 \times 10^6$; such polyethylenes are referred to as ultra-high molecular weight polyethylene and are readily available.

Porous ultra-high molecular weight polyethylene is useful in many applications, e.g., filters, pen tips, noise dampers, diffuser plates, battery separators, etc. This polyethylene has excellent physical properties, e.g., abrasion resistance, low coefficient of friction and toughness even at low temperatures.

Although ultra-high molecular weight polyethylene possesses many outstanding physical properties, it does not flow well under the influence of heat and pressure. Ultra-high molecular weight polyethylene is very viscous above its melting point and undergoes substantial shear degradation under the influence of the mechanical forces usually encountered in extrusion and injection molding processes.

In the field of porous products, it is not uncommon to encounter finished parts that are weak and brittle. We feel that the high melt viscosity and the particle morphology of the ultra-high molecular weight polyethylene influence the strength of the molded porous part. It is the object of this invention to overcome this problem of poor moldings by altering the particle morphology.

Porous plastic products may be prepared by the free sintering of a polyethylene powder in a closed mold. Various prior art references are available disclosing other methods for the preparation of porous products from ultra-high molecular weight polyethylene e.g., see U.S. Patent No. 3,051,993 and No. 3,954,927.

Also prior art discloses that the molding characteristics of ultra-high molecular weight polyethylene can be improved by heat treating the ultra-high molecular weight polyethylene powder prior to compression molding, see for example U.S. Patent No. 4,246,390. It is also taught in the prior art that ultra-high molecular weight polyethylene could be screw-injection molded if the powdered polymer was first formed into a pellet, see for example South African Patent No. 81/3915, an equivalent of EP—A—0 042 768.

### Brief Summary of the Invention

We have discovered that strong flexible porous products may be prepared from a compacted ultra-high molecular weight polyethylene powder. The compacted ultra-high molecular weight powder of this invention is prepared by (1) compacting the powder by application of an effective amount of pressure and heat to increase its bulk density and to substantially reduce the particle's "fine structure", e.g., by passing the powder through a pellet mill or a roll mill; and (2) if necessary, dispersing and classifying the compacted powder into powder having a particle size suitable for preparing porous products.

### Description of Figures

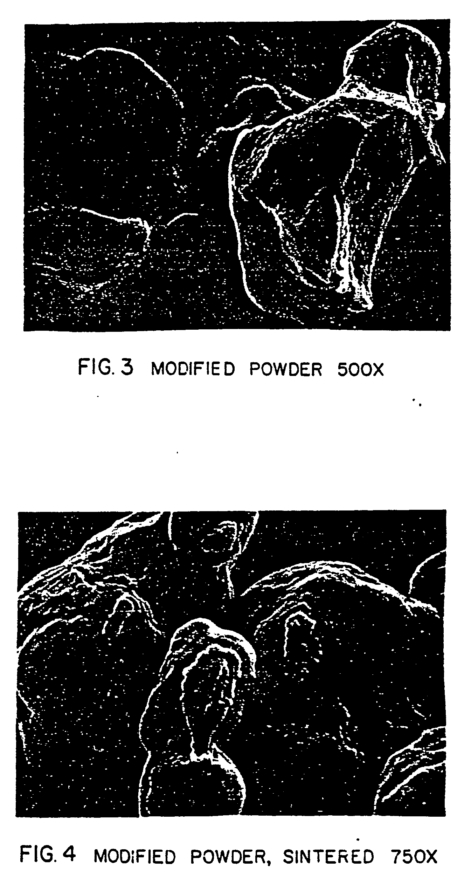

Figures 1—6 are scanning electron micrographs of an unmodified ultra-high molecular weight polyethylene powder at magnifications of 100; 250 (sintered); 500; 750 (sintered); 1500 (sintered) and 5000 respectively as identified on the figures.

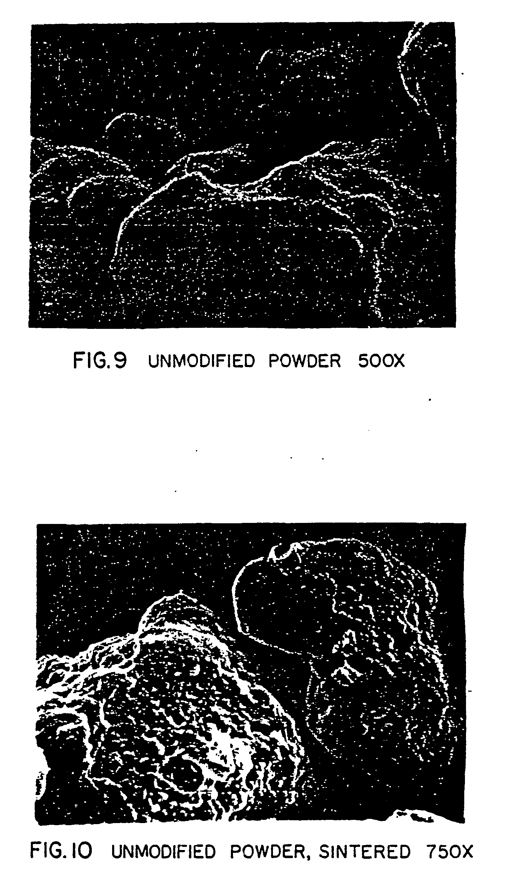

Figures 7—12 are scanning electron micrographs of ultra-high molecular weight polyethylene powder according to this invention of magnifications of 100, 250 (sintered), 500, 750 (sintered), 1500 (sintered), and 5000 respectively designated on the figures.

### Description of the Invention

The following terms and test procedures are used in this description.

Ultra-high molecular weight polyethylene (sometimes abbreviated as UHMW polyethylene) means a polyethylene having a molecular weight of about $1 \times 10^6$ or more as determined from the intrinsic viscosity of the material in decalin at 135°C in accordance with the following formula:

$$MW = 5.37 \times 10^4 \text{ (intrinsic viscosity) }^{1.49}$$

The weight average molecular weight values reported herein were determined in accord with ASTM D 4020-81 at a polymer concentration of 0.03 percent by weight.

The sieve analysis and stiffness values reported herein were determined in accord with the ASTM D-1921-63 test method and the ASTM D-74-70 test method using a 1.0 in.-lb. load, respectively.

The bulk density, or mass per unit volume of a material, was measured according to two methods. "Loose bulk density" is determined by gently filling a 100 ml capacity measuring beaker with the molding powder and leveling off any accumulated heap of powder with a piece of cardboard at an angle of 45°. The difference in weight of the filled and empty beaker is established to the nearest 0.1 gram and divided by 100 to give bulk density units (g/ml). The results are equivalent to those of the ASTM D-1895-69 method within a standard deviation of ±0.012 bulk density units. The "packed bulk density" of a molding powder is

2

determined in the same manner as loose bulk density except that the measuring beaker is tapped lightly on its side as the powder is added in order to settle it. When the powder will not settle any further and the beaker is filled and leveled, the full beaker is weighed and the packed bulk density is calculated.

The percent of degree of porosity was determined or calculated using the following formula:

$$\text{Porosity \%} = (1 - Ds/Dp) \times 100$$
$$Ds = \text{density of molded sample}$$
$$Dp = \text{density of polyethylene} = 0.94.$$

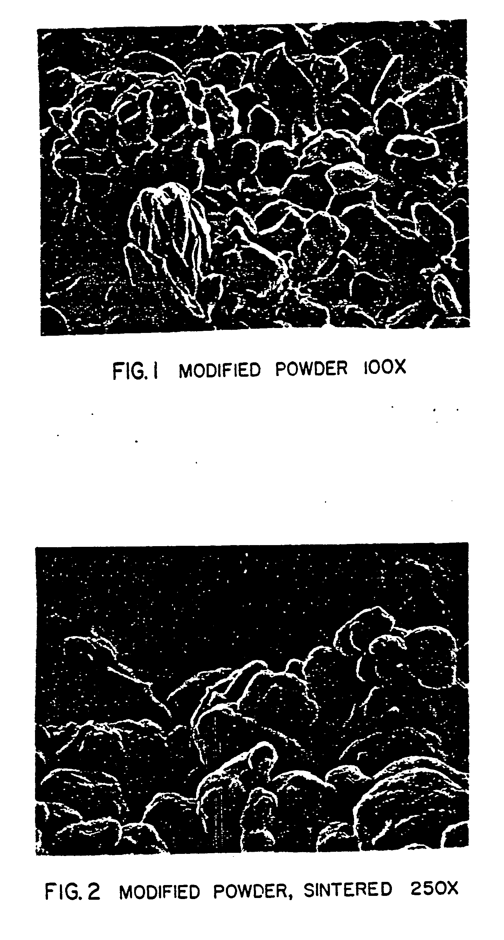

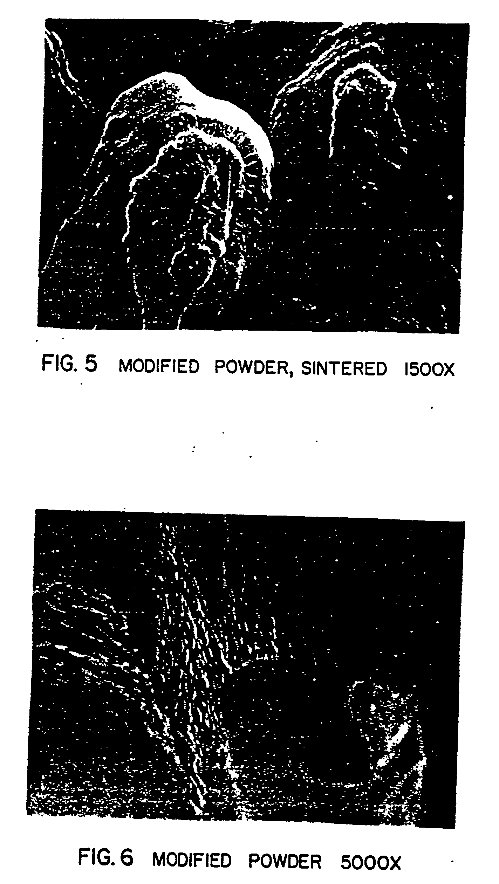

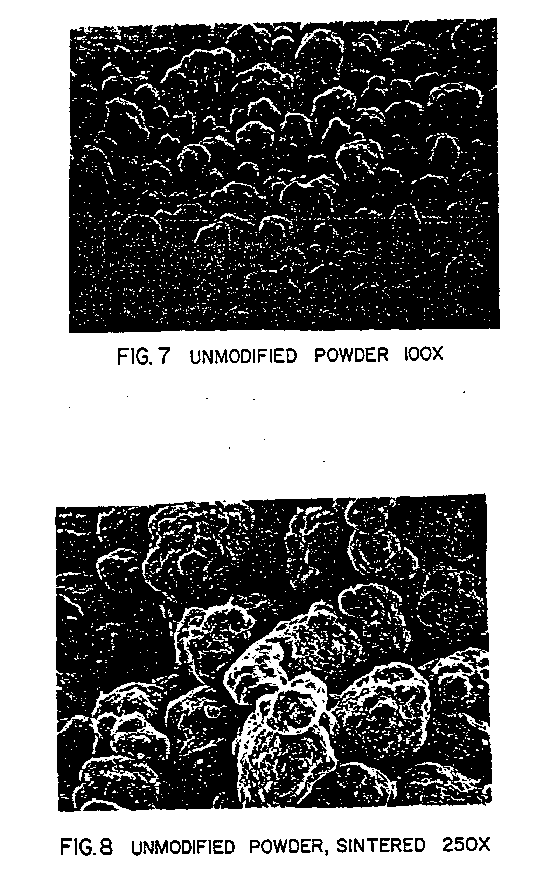

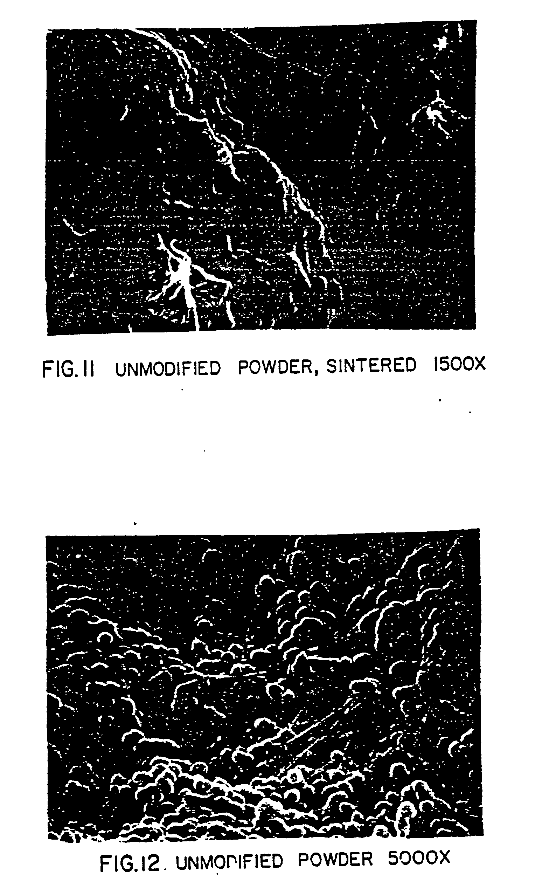

This invention is that of a compacted ultra-high molecular weight polyethylene powder having improved molding properties and which is particularly adapted for the preparation of porous products. The invention consists in a molding composition comprising an ultra-high molecular weight polyethylene powder having a packed bulk density equal to or greater than about 0.5 g/cm$^3$. It is characterized in that the particle size of said powder is about 1.0 mm or less, about 50 percent by weight of said particles have a particle size of about 0.25 mm or less and said particles have a surface that is substantially free of fine structure. The ultra-high molecular weight polyethylene of this invention is prepared by compacting unmodified ultra-high molecular weight polyethylene powder in a suitable device. The pressure and heat resulting from compacting alters the morphology of powder by substantially reducing the particles' "fine structure" and increases its bulk density value; see for example Figure 1 in comparison to Figure 7, and Figure 6 versus Figure 12; see also Table I, bulk density values.

Typical compacting devices are a pellet mill, a roll press or a tableting press. The unmodified ultra-high molecular weight polyethylene may be compacted into predetermined particle size suitable for direct molding into a porous part or it may be compacted into a larger particle, which is ground and classified into the desired particle size range.

Example I

An unmodified ultra-high molecular weight polyethylene powder produced by polymerization using a coordination catalyst system was compacted and pressed into about 0.64 × 0.64 cm (¼ inch × ¼ inch) pellets on a pellet mill. In the pellet mix, the unmodified powder was fed into the interior of a rotating circular die. Adjacent the interior perimeter of the die were located a pair of rollers mounted on fixed axes. These rollers force the powder through the holes provided in the rotating die. The compressed powder forms a number of strands which are cut into pellets by a fixed knife blade proximate the exterior surface of the die.

The pelletizing step created an amount of frictional heat which may not dissipate. In that case, water can be sprayed on or mixed with the powder before it is compressed. Excess moisture can be removed from the pelletss by air drying on a screen.

After the pellets were obtained they were broken in a Henschel type mixer by mixing them for two minutes. The disintegrated pellets were then passed over an 18-mesh size screen to remove large particles which were recycled to mixer for further grinding.

Example II

The screened modified powder was then placed in an eight-cavity, aluminum compression mold. The dimension of each cavity was 0.64 cm (¼") width × 3.81 cm (1—1½") length and 0.32 cm (⅛") depth. The mold was tapped several times to ensure good packing and leveled with additional powder. Excess powder was screened from the mold with a straight-edge and the cover was placed on the mold. The filled mold was placed between press plattens which had been preheated to 190.6°C (375°F) and 0.14—0.17 MPa (5—10 psig) pressure was placed on the plattens to close the mold. After twelve (12 minutes), the mold was removed from the press and cooled by slowly flooding the exterior of the mold with water. After cooling the mold, the test strips were removed from the cavities and air cooled for 24 hours.

Example III

Unmodified ultra-high molecular weight polyethylene powder was molded into test specimens using the procedure set forth in Example II.

The properties of the ultra-high molecular weight polyethylene powder and molded test specimens are reported below in Table I.

## Table I

| | Example 3 | Example 2 |
|---|---|---|
| | Unmodified Powder | Modified Powder |
| Bulk Density g/cm$^3$ Packed | 0.44 | 0.60 |
| Wt. Avg. Mole. Wt: | $2.4 \times 10^6$ | $2.4 \times 10^6$ |
| Sieve Analysis: | | |
| >1.0 mm % | 0.1 | -- |
| >0.5 mm % | 1.2 | 7.9 |
| >0.25 mm % | 1.9 | 6.7 |
| >0.125 mm % | 33.9 | 60.4 |
| >0.063 mm % | 58.0 | 23.6 |
| >0.063 mm % | 4.9 | 1.4 |
| Stiffnes psi: | 480 | 2107.4 |
| Degree of Porosity % | 48 | 39 |

The results of Examples II and III show that the stiffness of the molded part as determined by ASTM D-747-70 using a 0.454 kg (1.0 pound) load increased by over three hundred percent with only a nine percent drop in porosity.

The modified polyethylene powder of the invention can have a particle size distribution predominantly in the range of 0.25 mm to about 0.063 mm. Approximately ninety percent of the material may have a particle size between 0.063 mm and 0.25 mm. At least fifty percent of the powder should have a particle size within this range. Preferably seventy percent by weight of the molding powder may have a particle size of about 0.25 mm to 0.063. Preferably the molding composition of the invention contains less than one percent by weight of particles having a diameter greater than 1.0 mm and no substantial portion of the composition with a particle size less than 0.038 mm.

### Example IV

A quantity of unmodified ultra-high molecular weight polyethylene powder was screened and found to have a particle size distribution of about 86.1 percent of the particles within the range of 0.063 mm to 0.25 mm. The powder was molded into test specimens according to the procedure set forth in Example II. The properties of the molding powder and the molded test specimens are reported in Column A of Table II.

In a similar manner, another sample of unmodified UHMW polyethylene powder was analyzed and molded into test specimens. The sieve analysis showed that 55.5 percent of the sample had a particle size distribution between 0.063 mm and 0.25 mm. The results of the testing of this sample are reported in Column B of Table II.

Finally, a quantity of UHMW polyethylene powder was modified according to the process set forth in Example I and molded in accordance with the procedure of Example II. The modified powder was found to have a particle size distribution of 43.1 percent in the range of 0.063 mm to 0.25 mm. The properties of this sampling are set forth below in Column C of Table II.

## Table II

| | A<br>Unmodified<br>Powder | B<br>Unmodified<br>Powder | C<br>Modified<br>Powder |
|---|---|---|---|
| **Bulk Density** | | | |
| Packed g/cm$^3$ | 0.43 | 0.42 | 0.48 |
| Loose g/cm$^3$ | 0.39 | 0.38 | 0.41 |
| **Sieve Analysis** | | | |
| >0.5 mm % | 0.1 | 0 | 42.5 |
| >0.25 mm % | 13.7 | 44.5 | 14.3 |
| >0.125 mm % | 84.1 | 54.7 | 39.8 |
| >0.063 mm % | 2.0 | 0.8 | 3.3 |
| Pan % | 0.1 | 0 | 0.1 |
| **Particle Size Distribution** | | | |
| 0.063-0.25 mm % | 86.1 | 55.5 | 43.1 |
| Stiffness psi | 1366 | 819 | 805 |
| Relative Solution Viscosity | 40.3 | -- | 35.0 |

### Example V

Unmodified ultra-high molecular weight polyethylene powder was molded according to the procedure of Example II. A portion of the powder was then modified in accordance with the process of Example I and subsequently molded. The properties of the modified and unmodified powder and the molded specimens are set forth below in Table III.

5

## Table III

|  |  | A<br>Unmodified Powder | B<br>Modified Powder |
|---|---|---|---|
| **Bulk Density** | | | |
| Packed | g/cm$^3$ | 0.44 | 0.50 |
| Loose | g/cm$^3$ | 0.39 | 0.42 |
| **Sieve Analysis** | | | |
| >0.5 | mm % | 0.1 | 0.2 |
| >0.25 | mm % | 0.8 | 0.8 |
| >0.125 | mm % | 51.5 | 63.4 |
| >0.063 | mm % | 44.8 | 31.9 |
| >0.038 | mm % | 2.6 | 3.5 |
| Pan | % | 0.3 | 0.2 |
| **Particle Size Distribution** | | | |
| 0.063-0.25 | mm % | 95.3 | 95.3 |
| **Stiffness** | psi | 281 | 1761 |

### Example VI

A quantity of unmodified ultra-high molecular weight polyethylene powder was analyzed and then molded according to the procedure of Example II. The properties of the powder and the molded specimens are set forth below in Column A of Table IV.

A portion of the unmodified powder was pelletized while the die of the pelletizer was below normal operating temperature and the amount of frictional heat was low. Heat stabilizer was added at a concentration of 0.1 percent. The pellets were then broken and screened. The resulting modified powder was molded. The properites of the modified powder and molded specimens are set forth in Column C of Table IV.

Similarly, another quantity of unmodified ultra-high molecular weight polyethylene powder was pelletized, broken apart and screened. However, in this run the pelletization took place under normal conditions while the die was at operating temperature and there was an effective amount of frictional heat present. No heat stabilizer was added during pelletization. The modified powder was molded according to Example II and the properties of the powder and molded specimens are presented in Column D of Table IV.

Still another quantity of unmodified powder was pelletized while the die was at operating temperature, but this time a heat stabilizer was added at a concentration of 0.1 percent. The pellets were again broken apart, screened and then molded. The properties of the modified powder from this sample and the molded specimens are set forth in Column E of Table IV.

Finally, a sample of unmodified ultra-high molecular weight polyethylene powder was screened and artifically induced to have a particle size distribution approximately the distribution of the modified sample of Column E. The unmodified powder was molded using the procedure set forth in Example II. The properties of the powder and molded specimens of this sample are reported in Column B of Table IV.

## Table IV

|  |  | A | B | C | D | E |
|---|---|---|---|---|---|---|
| **Bulk Density** |  |  |  |  |  |  |
| Packed | g/cm$^3$ | 0.49 | 0.51 | 0.56 | 0.59 | 0.66 |
| Loose | g/cm$^3$ | 0.43 | 0.45 | 0.48 | 0.52 | 0.58 |
| **Sieve Analysis** |  |  |  |  |  |  |
| >0.5 | mm % | 0.7 | 1.5 | 11.9 | 11.1 | 10.0 |
| >0.25 | mm % | 2.1 | 7.9 | 8.6 | 9.1 | 8.2 |
| >0.125 | mm % | 37.4 | 25.2 | 22.6 | 51.0 | 24.8 |
| >0.063 | mm % | 55.1 | 58.9 | 49.8 | 25.2 | 49.6 |
| Pan | % | 4.8 | 6.6 | 7.2 | 3.6 | 7.3 |
| **Particle Size Distribution** |  |  |  |  |  |  |
| 0.063-0.25 | mm % | 92.5 | 84.1 | 72.4 | 76.2 | 74.4 |
| **Stiffness** | psi | 1092 | 739 | 2914 | 3034 | 3358 |
| **Relative Solution Viscosity** |  | 19.3 | 19.3 | -- | 17.7 | 17.3 |

The surface morphology of the modified polyethylene powder of this invention is markedly changed over the morphology of the unmodified powder. A change in surface morphology was also noted and disclosed by Seaver in his U.S. Patent 4,246,390. However, simply treating the UHMW powder according to Seaver did not produce the superior molding composition of this invention.

The surface of the unmodified UHMW polyethylene powder is characterized by a complex irregular surface structure, see e.g. Figure 5. This complex structure consists of nodules of spherules of less than 1 micron, crevices and fibrous structure which is termed "fine structure".

Lurie's South African patent 81/3915, an equivalent of EP—A—0042768, discloses a method for compacting UHMW polyethylene powder into pellets. However, he did not recognize the advantages of a compacted powder. Lurie's disclosure teaches, like Seaver, that the "fine structure" of the UMHW polyethylene powder should be substantially reduced and, as can be seen by comparing Figure 6 (untreated powder) with Figure 12 (treated powder), this reduction in fine strucutre is observed in the products of this invention. In the Lurie patent the combination of heat and pressure is believed to cooperate to compact the UHMW polyethylene powder into a pellet. It is our belief that this combination (i.e. heat and pressure) is required to produce the novel molding powders of this invention. We feel that heat, whether produced by the frictional compression of the UHMW polyethylene powder or externally applied and pressure are rquired to compact the particles. Generally UHMW polyethylene powders have a bulk density of less than 0.5 grams per cubic centimeter while the product of our invention has a bulk density greater than 0.5 g/cm$^3$, preferably greater than 0.55 g/cm$^3$.

The effective amount of pressure and temperature required to produce the novel composition of this invention can easily be determined by simple experimentation. It will be readily understood by one skilled in the art in light of this disclosure that, within reasonable limits, the use of lower pressure can be compensated by the use of a higher temperature or lower temperature compensated by higher pressure. The effective amount of pressure and temperature will also very with the equipment and residence time. It is always readily understood that stabilizers can be used in the process of this invention to prevent degradation of the polymer.

# EP 0 175 769 B1

**Claims**

1. A molding compositon comprising an ultra-high molecular weight polyethylene powder having a packed bulk density equal to or greater than about 0.5 g/cm$^3$ characterized in that the particle size of said powder is about 1.0 mm or less, about 50 percent by weight of said particles have a particle size of about 0.25 mm or less and said particles have a surface that is substantially free of fine structure.

2. A molding composition according to Claim 1 wherein the bulk density of said powder is greater than about 0.55 g/cm$^3$.

3. A molding composition according to Claim 1 wherein said bulk density is greater than 0.6 g/cm$^3$.

4. A molding composition according to Claim 1 wherein about seventy percent by weight of said particles have a particle size of about 0.25 mm or less.

5. A molding composition according to Claim 2 wherein about seventy percent by weight of said particles have a particle size of about 0.25 mm or less.

6. A molding composition according to Claim 3 wherein about seventy percent by weight of said particles have a particle size of about 0.25 mm or less.

7. A method of preparing a molding composition comprising subjecting UHMW polyethylene powder to an effective amount of heat and pressure so as to increase its bulk density and to substantially eliminate any fine structure of the surface of the powder characterized in that the particle size of said powder is less than about 1.0 mm and about fifty percent by weight of said particles have a particle size of about 0.25 mm or less.

8. The method of Claim 7 wherein the packed bulk density is increased to at least 0.5 g/cm$^3$ or more.

9. The method of Claim 7 wherein the packed bulk density is increased to at least 0.55 g/cm$^3$.

10. The method of Claim 7 wherein the packed bulk density is increased to at least 0.6 g/cm$^3$.

11. A porous product prepared by sintering an ultra-high molecular weight polyethylene powder having a packed bulk density of at least 0.5 g/cm$^3$, a particle size not greater than about 1.0 mm wherein about fifty percent by weight of said particles have a particle size of about 0.25 mm or less and wherein the surface of said powder is substantially free of fine structure prior to sintering.

**Patentansprüche**

1. Formmasse bestehend aus einem verdichteten Polyäthylenpulver extrem hohen Molekulargewichtes mit einer Schüttdichte im verdichteten Zustand, die gleich oder größer als ca. 0,5 g/cm$^3$ ist, dadurch gekennzeichnet, daß die Teilchengröße dieses Pulvers ca. 1,0 mm oder kleiner ist, ca. 50 Gew.-% dieser Teilchen eine Teilchengröße von ca. 0,25 mm oder kleiner haben und diese Teilchen eine Oberfläche aufweisen, die weitgehend frei von feiner Struktur ist.

2. Formmase nach Anspruch 1, dadurch gekennzeichnet, daß die Schüttdichte dieses Pulvers größer als ca. 0,55 g/cm$^3$ ist.

3. Formmase nach Anspruch 1, dadurch gekennzeichnet, daß diese Schüttdichte größer als 0,6 g/cm$^3$ ist.

4. Formmase nach Anspruch 1, dadurch gekennzeichnet, daß ca. 70 Gew.-% der Teilchen eine Teilchengröße von ca. 0,25 mm oder kleiner haben.

5. Formmase nach Anspruch 2, dadurch gekennzeichnet, daß ca. 70 Gew.-% der Teilchen eine Teilchengröße von ca. 0,25 mm oder kleiner haben.

6. Formmase nach Anspruch 3, dadurch gekennzeichnet, daß ca. 70 Gew.-% der Teilchen eine Teilchengröße von ca. 0,25 mm oder kleiner haben.

7. Verfahren zur Herstellung einer Formmasse, das darin, daß man ein Polyäthylenpulver extrem hohen Molekulargewichtes Wärme und Druck im ausreichenden Maße aussetzt, um die Schüttdichte zu erhöhen und eine eventuelle feine Struktur der Teilchenoberfläche weitgehend zu eliminieren, dadurch gekennzeichnet, daß die Teilchengröße dieses Pulvers kleiner als ca. 1,00 mm ist und ca. 50 Gew.-% dieser Teilchen eine Teilchengröße von ca. 0,25 mm oder kleiner haben.

8. Verfahren nach Anspruch 7, bei dem man die Schüttdichte im verdichteten Zustand auf mindestens 0,5 g/cm$^3$ oder mehr erhöht.

9. Verfahren nach Anspruch 7, bei dem man die Schüttdichte im verdichteten Zustand auf mindestens 0,55 g/cm$^3$ oder mehr erhöht.

10. Verfahren nach Anspruch 7, bei dem man die Schüttdichte im verdichteten Zustand auf mindestens 0,6 g/cm$^3$ oder mehr erhöht.

11. Ein poröses Produkt, hergestellt durch Sintern eines Polyäthylenpulvers extrem hohen Molekulargewichtes, das eine Schüttdichte im verdichteten Zustand von mindestens 0,5 g/cm$^3$ und eine Teilchengröße von nicht mehr als ca. 1,0 mm aufweist, wobei ca. 50 Gew.-% dieser Teilchen eine Teilchengröße von ca. 0,25 mm oder kleiner haben und wobei vor dem Sintern die Oberfläche dieses Pulvers weitgehend frei von feiner Struktur ist.

**Revendications**

1. Une composition à mouler comprenant une poudre de polyéthylène de très haut poids moléculaire

8

agglomérée ayant une densité apparente à l'état tassé égale ou supérieure à 0,5 g/cm³, caractérisée en ce que la dimension de particules de ladite poudre est d'environ 1,0 mm ou moins, environ 50% en poids desdites particules ont une dimension d'environ 0,25 mm ou moins et lesdites particules ont une surface qui est pratiquement exempte de structure fine.

2. Une composition à mouler selon la revendication 1, dans laquelle la densité apparente de ladite poudre est supérieure à environ 0,55 g/cm³.

3. Une composition à mouler selon la revendication 1, dans laquelle ladite densité apparente est supérieure à 0,6 g/cm³.

4. Une composition à mouler selon la revendication 1, dans laquelle environ 70% en poids desdites particules ont une dimension d'environ 0,25 mm ou moins.

5. Une composition à mouler selon la revendication 2, dans laquelle environ 70% en poids desdites particules ont une dimension d'environ 0,25 mm ou moins.

6. Une composition à mouler selon la revendication 3, dans laquelle environ 70% en poids desdites particules ont une dimension d'environ 0,25 mm ou moins.

7. Un procédé de fabrication d'une composition à mouler consistant à soumettre une poudre de polyéthylène de très haut poids moléculaire à une quantité efficace de chaleur et de pression de manière à augmenter sa densité apparente et à éliminer pratiquement toute structure fine de la surface de la poudre, caractérisé en ce que la dimension de particules de ladite poudre est de moins d'environ 1,0 mm et environ 50% en poids desdites particules ont une dimension d'environ 0,25 mm ou moins.

8. Le procédé selon la revendication 7 dans lequel la densité apparente à l'état tassé est augmentée jusqu'à au moins 0,5 g/cm³ ou plus.

9. Le procédé selon la revendication 7, dans lequel la densité apparente à l'état tassé est augmentée jusqu'à au moins 0,55 g/cm³ ou plus.

10. Le procédé selon la revendication 7, dans lequel la densité apparente à l'état tassé est augmentée jusqu'à au moins 0,6 g/cm³ ou plus.

11. Un produit poreux préparé en frittant une poudre de polyéthylène de très haut poids moléculaire ayant une densité apparente à l'état tassé d'au moins 0,5 g/cm³, une dimension de particules de pas plus d'environ 1,0 mm, environ 50% en poids desdites particules ayant une dimension d'environ 0,25 mm ou moins et la surface de ladite poudre étant sensiblement exempte de structure fine avant le frittage.

FIG. I   MODIFIED POWDER  100X

FIG. 2   MODIFIED POWDER, SINTERED   250X

FIG. 3 MODIFIED POWDER 500X

FIG. 4 MODIFIED POWDER, SINTERED 750X

FIG. 5 MODIFIED POWDER, SINTERED 1500X

FIG. 6 MODIFIED POWDER 5000X

FIG. 7 UNMODIFIED POWDER 100X

FIG.8 UNMODIFIED POWDER, SINTERED 250X

4

FIG.9 UNMODIFIED POWDER 500X

FIG.IO UNMODIFIED POWDER, SINTERED 750X

FIG.II UNMODIFIED POWDER, SINTERED I500X

FIG.I2. UNMODIFIED POWDER 5000X